# EUROPÄISCHE PATENTSCHRIFT

(11) **EP 2 983 934 B1**
(45) Veröffentlichungstag und Bekanntmachung des Hinweises auf die Patenterteilung: **03.01.2018**
(21) Anmeldenummer: 14706839.9
(22) Anmeldetag: 26.02.2014
(51) Int. Cl.: B60K 11/06, B60K 11/08

(54) **LUFTFÜHRUNG**
AIR GUIDE
DISPOSITIF DE GUIDAGE D'AIR

(30) Priorität: 09.04.2013 DE 102013103551
(43) Veröffentlichungstag der Anmeldung: 17.02.2016
(73) Patentinhaber: HBPO GmbH, 59557 Lippstadt (DE)
(72) Erfinder: SCHMIDT, Ralf, 59302 Oelde (DE); BRÜCKNER, Reinhold, 33442 Herzebrock-Clarholz (DE); HÖWELKRÖGER, Steffen, 33129 Delbrück (DE)
(74) Vertreter: Vogel, Andreas
(86) Internationale Anmeldenummer: PCT/EP2014/053766
(87) Internationale Veröffentlichungsnummer: WO 2014/166669

(56) Entgegenhaltungen:
- EP-A1- 2 028 082
- EP-A2- 1 243 455
- DE-A1- 19 525 698
- DE-A1- 19 826 706
- DE-U1- 8 234 137
- GB-A- 469 521
- US-A- 4 774 911

## Beschreibung

Die Erfindung betrifft eine Luftführung, insbesondere für ein Kühlmodul eines Frontendmoduls eines Kraftfahrzeugs, mit einem Luftführungskörper, der eine Lufteintrittsöffnung und eine Luftaustrittsöffnung aufweist, um Luft von außen nach innen bzgl. des Kraftfahrzeugs zu führen.

In herkömmlichen Kraftfahrzeugen werden Frontendmodule eingebaut, die unter anderem eine Luftführung aufweisen, um kalte Luft von außen in Richtung zum Motor zu leiten und den Motor zu kühlen. Die Luftführungen werden dabei zwischen einem Kühlergrill an der Außenseite des Fahrzeugs und einem Kühlmodul auf der Motorseite eingesetzt.

Die Luftführungen können dabei als planare Bauteile ausgebildet werden. Diese planaren Bauteile werden jedoch immer häufiger von dreidimensionalen Kunststoffbauteilen abgelöst, die eine Mantelfläche zum Formen von Außenluft aufweisen, um Luft optimal von außen in Richtung zum Motor zu führen. Die Bauteile erweisen sich als zunehmend sperrig, da sie bei Lagerung und Transport viel Platz benötigen. Außerdem erfordern diese Kunststoffbauteile zusätzliche Ladungsträger dazwischen, die die aufeinandergesetzten Kunststoffbauteile vor dem Zusammendrücken schützen sollen. Nach dem Transport der Bauteile zum Abnehmer, müssen die Ladungsträger nachträglich zurück zum Hersteller. Daher verursachen diese Bauteile vor allem in ihrem Transport einen hohen Aufwand bzw. hohe Kosten.

Aus der EP 1 243 455 A2 ist ein Luftführungskanal für ein Kraftfahrzeug bekannt, welcher sich zwischen zumindest einer an einem Korosserieaußenhautteil ausgebildeten Lufteintrittsöffnung und einem mit Abstand dazu angeordneten Kühler erstreckt. Dabei umfasst der Luftführungskanal ein Stützelement, das mit einer Hülle aus einem wärmefesten und luftundurchlässigen Material bespannt ist.

Aus der DE 195 25 698 A1 ist eine gattungsgemäße Luftführung bekannt.

Die Schrift DE 195 25 698 A1 offenbart einen Stoßfänger an einem Kraftfahrzeug-Endabschnitt, der gegenüber der Karosserie des Kraftfahrzeuges verschieblich angeordnet ist und zusammen mit einem karosseriefesten Bauteil einen Luftführungskanal bildet. Hierbei ist vorgesehen, dass in den Luftführungskanal ein reversibel verformbarer Hohlkörper eingesetzt ist, in dessen Inneren die Luft geführt wird.

Der Erfindung liegt daher eine Aufgabe zugrunde, die oben genannten Nachteile zu überwinden. Insbesondere ist die Aufgabe der vorliegenden Erfindung, eine Luftführung bereitzustellen, die es ermöglicht, beim Transport den erforderlichen Lagerraum zu minimieren und die Logistikkosten zu senken.

Die erfindungsgemäße Aufgabe wird durch eine erfindungsgemäße Luftführung gemäß Anspruch 1, durch ein erfindungsgemäßes Montageverfahren gemäß Anspruch 13 und ein erfindungsgemäßes Frontendmodul gemäß Anspruch 14 gelöst. Weitere Merkmale und Details der Erfindung ergeben sich aus den Unteransprüchen, der Beschreibung und den Zeichnungen. Dabei gelten Merkmale und Details, die im Zusammenhang mit der erfindungsgemäßen Luftführung beschrieben sind, selbstverständlich auch im Zusammenhang mit dem erfindungsgemäßen Montageverfahren sowie im Zusammenhang mit dem erfindungsgemäßen Frontendmodul und jeweils umgekehrt, so dass bzgl. der Offenbarung zu den einzelnen Erfindungsaspekten stets wechselseitig Bezug genommen wird bzw. werden kann.

Der Erfindungsgedanke liegt dabei darin, dass der Luftführungskörper aus einem derartigen Material ausgebildet sein kann, dass der Luftführungskörper in einen Montagezustand und in einen Transportzustand gebracht werden kann, wobei im Montagezustand der Luftführungskörper ein wesentlich größeres Volumen aufweisen kann als im Transportzustand. Vorteilhafterweise stellt die Erfindung eine Luftführung bereit, die anstelle von starren und sperrigen Luftführungskörpern nunmehr einen flexibel gestalteten Luftführungskörper aufweist, sodass die Luftführung für den Transport in den Transportzustand gebracht werden kann. In dem Transportzustand nimmt die Luftführung ein wesentlich geringeres Volumen ein, sodass pro Ladung viel mehr Bauteile transportiert werden können. Des Weiteren ist von erheblichem Vorteil, dass im Transportzustand der Luftführungskörper eine flächige Form annehmen kann, sodass das Lagervolumen optimal ausgenutzt werden kann. Außerdem kann das Material derart ausgewählt sein, dass es zusammengelegt und/oder gefaltet werden kann, ohne beschädigt zu werden, sodass die zusammengefalteten Luftführungen aufeinander gestapelt werden können, ohne die unten liegenden Bauteile dauerhaft zu beschädigen. Dann kann vorteilhafterweise bei der Lagerung der Luftführungen auf die Ladungsträger verzichtet werden. Dadurch kann nicht nur der für den Transport zur Verfügung stehende Raum optimal ausgenutzt, sondern auch die Transportkosten reduziert werden. Für die Montage an einem Frontendmodul eines Fahrzeuges kann der Luftführungskörper anschließend wieder in den Montagezustand gebracht werden.

Gemäß der vorliegenden Erfindung kann das Material als ein Textil ausgewählt sein. Das Textil stellt vorteilhafterweise ein dünnes, leichtes und flexibles Material dar, wobei das Gewicht der Luftführung vorteilhafterweise reduziert wird. Erfindungsgemäß kann daher der Luftführungskörper reversibel in den Transport- und in den Montagezustand gebracht werden, ohne das Material zu beschädigen. Außerdem ermöglicht dieses flexible Textil einen kompakten und effizienten Transport der Luftführung. Die Luftführung kann durch Verwendung von flexiblem Textil unterschiedlich ausgestaltet werden und verschiedene Formen annehmen. Hierzu kann das Textil entsprechende Zuschnitte und Nähte aufweisen. Der Vorteil der erfindungsgemäßen Luftführung ist somit, dass die Luftführung für unterschiedliche Fahrzeugmodelle ausgestaltet werden kann. Außerdem kann das Material einfach und kostengünstig hergestellt werden. Beispielsweise kann das Textil ein technisches Textil sein.

Vorteilhafterweise kann das Material aus synthetischen Polymeren ausgebildet sein, insbesondere aus Polyester, Polyamid, Polyimid, Polyethylen, Polypropylen, Elastan, Nylon oder dergleichen. Vorteilhafterweise zeichnen sich die Materialien aus synthetischen Polymeren durch ihre hohe Festigkeit, Steifigkeit und Zähigkeit aus. Sie lassen sich gut verarbeiten und sind kostengünstig. Materialien aus synthetischen Polymeren können außerdem leicht mit flexiblen Eigenschaften versehen und in gewünschten Formen hergestellt werden. Aus diesem Grund sind die Kunststofftextilien besonders geeignet zum Herstellen von verschieden ausgestalteten Luftführungen für unterschiedliche Fahrzeugmodelle.

Des Weiteren kann das Material aus natürlichen Fasern oder natürlichen Polymeren ausgebildet sein, insbesondere aus Baumwolle, Leinen, Viskose, Modal, Gummi oder dergleichen. Die Materialien aus natürlichen Fasern oder natürlichen Polymeren sind vorteilhafterweise CO₂-neutral. Der freigesetzte CO₂ beim Verbrennen von diesen Stoffen wird zumindest zum Teil beim Wachsen der Rohstoffe, wie Pflanzen oder Holz, aus der Atmosphäre gebunden. Diese Stoffe lassen sich umweltfreundlich verarbeiten und können aus nachwachsenden Rohstoffen hergestellt werden. Außerdem sind die Materialien aus natürlichen Fasern oder natürlichen Polymeren reißfest, verformbar und leicht.

Das erfindungsgemäße Material kann vorteilhafterweise derart ausgebildet sein, dass es luftundurchlässig und/oder wasserabweisend und/oder faltbar ist, das die Luftführung wie Luftundurchlässigkeit und Wasserabweisung realisiert werden. Dabei ist die Luftundurchlässigkeit für die Luftführung wichtig, um zu vermeiden, dass kühle Luft von außen sich nicht mit der Abwärme des Motors mischt. Somit kann die erfindungsgemäße Luftführung, den Motorinnenraum hermetisch abschließen, sodass keine warme Luft zum Kühlen des Motors gelangen kann. Die wasserabweisende Eigenschaft hilft durch die Luftführung eine gewünschte Abdichtung zwischen dem Außenbereich des Kraftfahrzeugs und dem Motorinnenraum herzustellen, damit Feuchtigkeit und Schmutz von außen nicht zum Motor gelangen können. Das faltbare Material kann vorteilhafterweise dazu dienen, die Luftführung in den Montage- und in den Transportzustand reversibel zu überführen, ohne dass Material zu beschädigen.

Dabei ist es denkbar, dass die Verstärkungsstruktur aus Hartplastik und/oder Leichtmetall und/oder Glasfasern oder dergleichen ausgebildet sein kann. Vorteilhafterweise kann die Verstärkungsstruktur in dem Montagezustand das Material aufspannen, um eine geforderte geometrische Form der Luftführung zu bekommen, die optimal zum Leiten der Luft geeignet ist. Zudem kann die Verstärkungsstruktur dazu dienen, die Form bzw. die Mantelfläche des Luftführungskörpers während des Betriebes stabil zu halten. Ferner kann die Verstärkungsstruktur dazu dienen, die geometrische Ausgestaltung der Luftführung an vorhandene Geometrien verschiedener Motorinnenräume anzupassen. Des Weiteren kann es besonders vorteilhaft sein, dass die Verstärkungsstruktur derart ausgebildet sein kann, dass die Luftführung nach einem Teleskopprinzip bzw. Zeltprinzip aufgebaut und wieder zusammengefaltet werden kann. Folglich kann die Luftführung einfach in den Montagezustand und/oder in den Transportzustand gebracht werden. Der Aufbau und die Montage der erfindungsgemäßen Luftführung können dadurch erheblich vereinfacht werden.

Die Verstärkungsstruktur kann vorteilhafterweise im Material eingewebt und/oder mit dem Material form- und/oder kraft- und/oder stoffschlüssig verbunden und/oder am Material eingeklemmt oder eingeclipst sein. Damit kann das Gewicht der Luftführung reduziert werden und ihre Herstellung noch weiter vereinfacht werden. Die Verstärkungsstruktur kann vorteilhafterweise ein Skelett bzw. ein Gestell für den Luftführungskörper bilden, um die gewünschte Form der Luftführung zu erhalten.

Vorteilhafterweise kann die Verstärkungsstruktur Verstärkungselemente an der Lufteintrittsöffnung oder an der Luftaustrittsöffnung aufweisen. Die erfindungsgemäßen Verstärkungselemente können dabei die notwendigen Gelenke und/oder Verbindungs- und/oder Eck- und/oder Abschlussstücke der Luftführung bilden, um die Luftführung aus dem Transportzustand in den Montagezustand zu überführen und die Luftführung im Montagezustand zu stabilisieren. Die Verstärkungselemente können somit vorteilhafterweise dazu dienen, das Teleskopprinzip bzw. Zeltprinzip beim Aufbauen und Zusammenklappen der Luftführung zu realisieren. Dabei ist es denkbar, dass die erfindungsgemäße Luftführung mindestens zwei Verstärkungselemente an der Lufteintrittsöffnung oder an der Luftaustrittsöffnung aufweisen kann, die außerdem dazu dienen können, die Luftführung am Fahrzeug zu befestigen.

Vorteilhafterweise können die Stäbe aus Glasfaser oder aus Leichtmetall ausgebildet sein. Die Stäbe können zum Aufspannen des Materials dienen. Die Verstärkungselemente können vorteilhafterweise als standardisierte Bauteile ausgebildet werden, die dazu dienen können, Luftführungen unterschiedlicher Form aufzubauen.

Gemäß einem weiteren Vorteil der Erfindung können die Verstärkungselemente im Wesentlichen in Richtung von der Luftaustrittsöffnung zu der Lufteintrittsöffnung und/oder quer dazu ausgerichtet sein. Somit können die Verstärkungselemente optimal ein Gestell zum Aufspannen des Materials bilden. Alternativ ist es denkbar, dass die Luftführung nur die Verstärkungselemente aufweist, die in Richtung von der Luftaustrittsöffnung zu der Lufteintrittsöffnung oder nur quer dazu ausgerichtet sind. Dabei kann es vorteilhaft sein, dass die Verstärkungselemente Gelenke aufweisen können, um im zusammengebauten Transportzustand ein minimales Volumen der Luftführung zu erhalten und/oder im aufgebauten Montagezustand der Luftführung besondere Form mit geschwungenen Linien zu verleihen.

Vorteilhafterweise können die Verstärkungselemente austauschbar und/oder fest im Material integriert sein. Austauschbare Verstärkungselemente können vorteilhafterweise dazu dienen, die Luftführung in Form eines Baukastensystems zu realisieren, wobei dieselben Verstärkungselemente zum Formen von Luftführungen unterschiedlicher Ausgestaltungen dienen können.

Die Erfindung kann weiterhin vorteilhafterweise vorsehen, dass der Luftführungskörper Befestigungselemente aufweisen kann, um die Luftführung am Kraftfahrzeug form- und/oder kraftschlüssig zu befestigen. Die Befestigungselemente können stabiler ausgebildet sein als das Material. Hierbei können die Befestigungselemente dazu dienen, die Luftführung mit der Lufteintrittsöffnung an einer Öffnung im Karosserieaußenteil bzw. am Frontendmodul des Fahrzeugs und mit der Luftaustrittsöffnung am Kühlmodul zu befestigen. Die Befestigungselemente können außerdem dazu dienen, die Öffnung im Karosserieaußenteil bzw. im Frontendmodul abzudichten, sodass die Luft von außen nur durch die Luftführung zum Kühlmodul gelangen kann. Zudem können die Befestigungselemente dazu dienen, den Raum zwischen dem Kühlmodul und dem Motorkühlkreislauf abzudichten, um zu verhindern, dass die warme Luft sich mit der Luft von außen vermischen kann und wieder zum Motor gelangen kann.

Die Befestigungselemente können dabei mit dem Material form- und/oder kraft- und/oder stoffschlüssig verbunden sein oder im Material integriert sein. Somit können die Befestigungselemente als Teile der Luftführung ausgebildet sein. Die Befestigungselemente können vorteilhafterweise dazu dienen, eine stabile Form der Luftführung zu erhalten. Weiterhin können die Befestigungselemente als stabile Greifelemente beim Aufspannen des Materials dienen, um die Montage der Luftführung zu erleichtern. Außerdem können die Befestigungselemente dazu dienen, die Lufteintrittsöffnung und die Luftaustrittsöffnung zumindest zum Teil zu definieren. Dabei ist es denkbar, dass die Befestigungselemente in Form von Rast- und/oder Clipselementen oder Haken oder Schrauben ausgebildet sein können, um die Luftführung am Fahrzeug zu befestigen. Durch die erfindungsgemäßen Befestigungselemente kann erreicht werden, dass die erfindungsgemäße Luftführung ebenso leicht vom Fahrzeug bzw. Frontendmodul zwecks Wartung der Kühlung oder anderer Frontendkomponenten abgebaut und wieder eingebaut werden kann.

Die erfindungsgemäße Aufgabe wird weiterhin durch ein Verfahren zur Montage einer Luftführung gelöst, die oben beschrieben wurde, an einem Frontendmodul eines Kraftfahrzeuges, umfassend folgende Schritte:
- Überführen der Luftführung von einem Transportzustand in einen Montagezustand, wobei die Luftführung im Montagezustand ein wesentlich größeres Volumen einnimmt als im Transportzustand,
- Montieren der Luftführung am Frontendmodul, wobei die Schritte in beliebiger Reihenfolge ausgeführt werden können.

Vorteilhafterweise ermöglicht die Erfindung somit, dass die Luftführung einfach und schnell aufgebaut werden kann und am Fahrzeug abnehmbar befestigt werden kann. Die erfindungsgemäße Luftführung kann dabei anstelle von starren und sperrigen Luftführungskörpern verwendet werden, um flexibel ausgestaltete Luftführungskörper aufzubauen. Die erfindungsgemäße Luftführung kann im Transportzustand transportiert werden, in welchem die Luftführung ein wesentlich geringeres Volumen einnimmt als im Montagezustand. Zum Aufbau am Fahrzeug kann die Luftführung zuerst in den Montagezustand gebracht werden. Dabei kann die Luftführung ausgespannt werden, sodass die Luftführung einen stabilen Luftführungskörper einer bestimmten Form mit einer Lufteintrittsöffnung und einer Luftaustrittsöffnung bilden kann. Anschließend kann die Luftführung von einer Seite an einem Frontendmodul bzw. Stoßfänger des Kraftfahrzeuges und von der anderen Seite an einem Kühlmodul montiert werden. Alternativ ist es denkbar, dass die Luftführung im eingebauten Zustand von einer Seite am Frontendmodul oder am Kühlmodul montiert werden kann und erst dann aufgespannt werden kann. Anschließend kann die Luftführung von der anderen Seite am Kühlmodul bzw. am Frontendmodul befestigt werden.

Die Erfindung löst die erfindungsgemäße Aufgabe außerdem durch eine Verwendung eines Materials für eine Luftführung, insbesondere für ein Kühlmodul eines Frontendmoduls eines Kraftfahrzeuges. Hierzu ist es erfindungsgemäß vorgesehen, dass das Material derart ausgebildet sein kann, dass die Luftführung in einen Montagezustand und in einen Transportzustand gebracht werden kann, wobei die Luftführung im Montagezustand ein wesentlich größeres Volumen einnehmen kann als im Transportzustand.

Des Weiteren wird die erfindungsgemäße Aufgabe durch ein Frontendmodul eines Kraftfahrzeuges mit einer zuvor beschriebenen Luftführung gelöst, die nach einem erfindungsgemäßen Verfahren an einem Frontendmodul eines Kraftfahrzeuges montiert werden kann.

Erfindungsgemäß können die Merkmale der Beschreibung und der Ansprüche der erfindungsgemäßen Luftführung, des erfindungsgemäßen Montageverfahrens sowie des erfindungsgemäßen Frontendmoduls sowohl einzeln für sich als auch in den verschiedensten Kombinationen erfindungswesentlich sein. Weitere, die Erfindung verbessernde Maßnahmen werden nachstehend gemeinsam mit der Beschreibung der bevorzugten Ausführungsbeispiele der Erfindung anhand der Figuren näher dargestellt. Es zeigen:
- Fig. 1a: eine schematische Darstellung eines herkömmlichen Frontendmoduls eines Kraftfahrzeuges mit einer Luftführung und einem Kühlmodul in Explosionsansicht,
- Fig. 1b: eine schematische Darstellung des Frontendmoduls von Figur 1 a in einem zusammengebauten Zustand,
- Fig. 2a: eine schematische Darstellung eines erfindungsgemäßen Frontendmoduls eines Kraftfahrzeuges mit einer erfindungsgemäßen Luftführung und einem Kühlmodul in einem Montagezustand,
- Fig. 2b: eine schematische Darstellung des Frontendmoduls von Figur 2a mit der erfindungsgemäßen Luftführung in einem Transportzustand,
- Fig. 3a: ein Ausführungsbeispiel der erfindungsgemäßen Luftführung in perspektivischer Darstellung,
- Fig. 3b: eine schematische Darstellung der Luftführung von Figur 3a in einer Schnittdarstellung A-A,
- Fig. 4a: eine schematische Darstellung der Luftführung im Montagezustand,
- Fig. 4b: eine schematische Darstellung der Luftführung im Transportzustand,
- Fig. 5a: ein Ausführungsbeispiel der erfindungsgemäßen Luftführung in perspektivischer Darstellung,
- Fig. 5b: eine vergrößerte Darstellung eines Teils der Luftführung von Figur 5a,
- Fig. 6a: ein Ausführungsbeispiel der erfindungsgemäßen Luftführung in perspektivischer Darstellung,
- Fig. 6b: eine vergrößerte Darstellung eines Teils der Luftführung von Figur 6a.

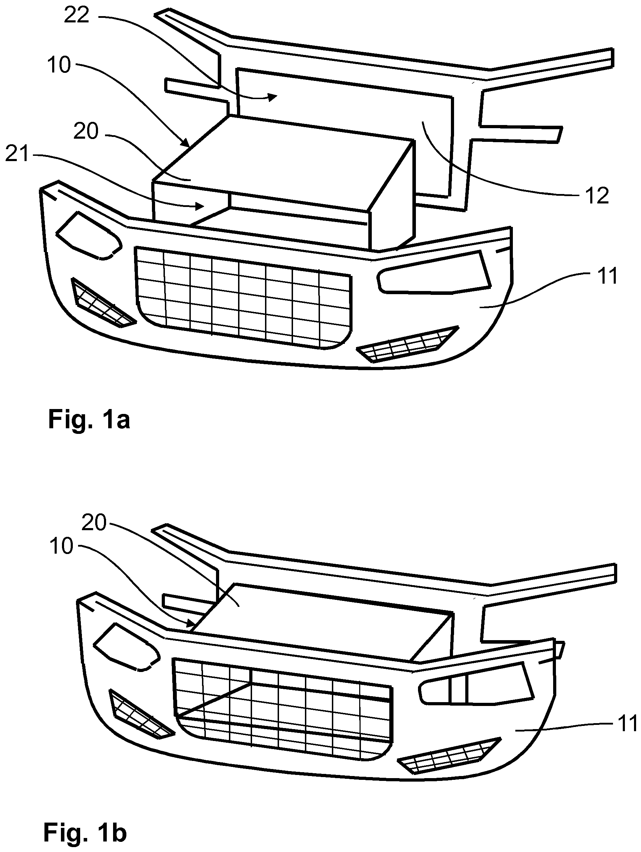

Figur 1 zeigt ein herkömmliches Frontendmodul 11, das vorne an einem Kraftfahrzeug eingebaut werden kann. Auf der Motorseite des Fahrzeugs wird ein Kühlmodul 12 aufgebaut. Zwischen einem sogenannten Kühlergrill des Frontendmoduls 11 und dem Kühlmodul 12 wird eine Luftführung 10 positioniert, um kalte Luft von außen in Richtung zum Kühlmodul 12 zu leiten und den Motor hinter dem Kühlmodul 12 zu kühlen. Herkömmliche Luftführungen 10 weisen einen starren Luftführungskörper 20 zum Formen der Außenluft auf, welcher eine Lufteintrittsöffnung 21 nach außen und eine Luftaustrittsöffnung 22 in Richtung zum Motor aufweist. Solche bekannten Luftführungen 10 sind sperrig ausgebildet und benötigen bei Lagerung und Transport viel Platz.

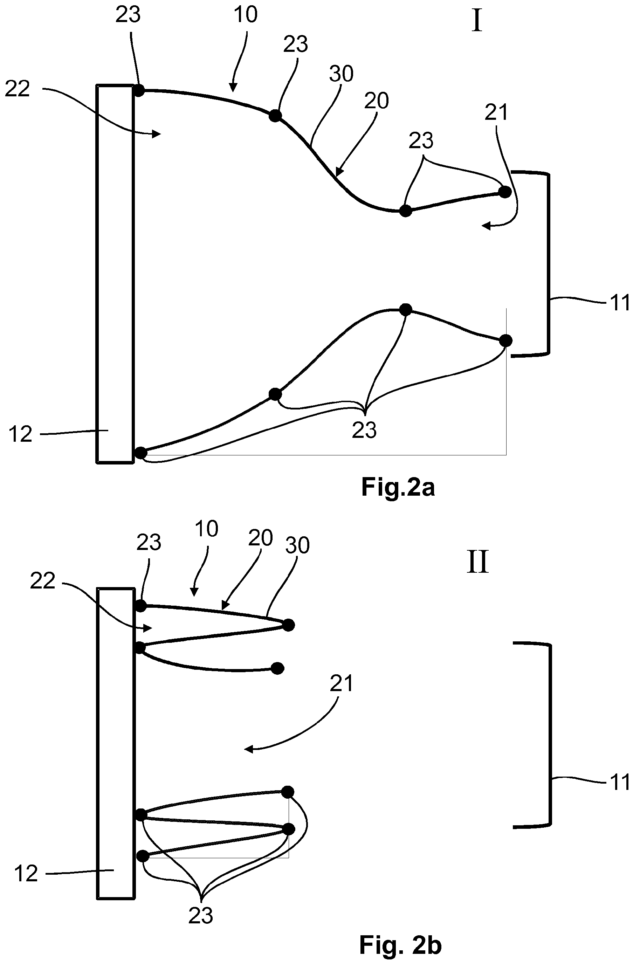

Um die bekannten Luftführungen 20 zu verbessern, schlägt die Erfindung vor, den Luftführungskörper 20, wie gezeigt in den Figuren 2a und 2b auszugestalten. Die erfindungsgemäße Luftführung 20 ist dabei aus einem derartigen Material 30 ausgebildet, welches es erlaubt, den Luftführungskörper 20 aus einem Montagezustand I der Figur 2a und in einen Transportzustand II der Figur 2b zu bringen, in welchem der Luftführungskörper 20 ein wesentlich geringeres Volumen aufweist als im Montagezustand I. Der Vorteil der Erfindung liegt dabei darin, dass die Luftführung 10 anstelle von dem sperrigen Luftführungskörper 20 der Figuren 1 a und 1b den flexiblen Luftführungskörper 20 gemäß der Figuren 2a bis 6b erhält, der sich für den Transport zusammenfalten lässt, ohne beschädigt zu werden. Dann können pro Ladung mehr Bauteile transportiert werden und die Transportkosten gesenkt werden. Für die Montage am Frontendmodul 11 und am Kühlmodul 12 kann der Luftführungskörper 20 nach dem Transport wieder in den Montagezustand I gebracht werden. Gemäß der Erfindung kann die Luftführung 20 reversibel in den Montagezustand I und in den Transportzustand II gebracht werden.

Gemäß der Erfindung kann das Material 30 beispielsweise ein technisches Textil sein. Das Textil hat den Vorteil, kostengünstig in Herstellung zu sein, ein geringes Gewicht aufzuweisen und flexibel zu sein. Aus diesem Grund kann die erfindungsgemäße Luftführung 20 in verschiedenen Fahrzeugmodellen eingesetzt werden. Das Material kann gemäß der Erfindung sowohl aus synthetischen als auch aus natürlichen Polymeren oder sogar aus natürlichen Fasern ausgebildet sein. Durch eine geeignete Wahl des Materials 30 können die wesentlichen Eigenschaften der Luftführung 10 bereitgestellt werden, wie Luftundurchlässigkeit, um zu verhindern, dass warme Luft durch die Luftführung 20 zum Motor gelangen kann, und Wasserabweisung, um den Motorinnenraum von Umwelteinflüssen, wie Feuchtigkeit und Schmutz, zu schützen.

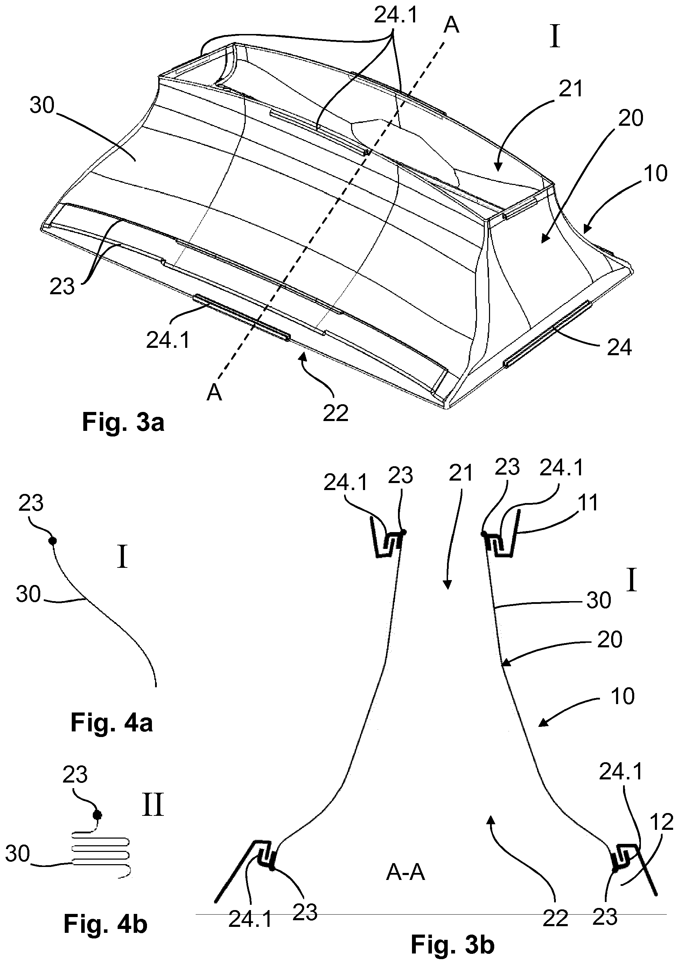

Erfindungsgemäß kann die Luftführung 20 eine Verstärkungsstruktur 23 aufweisen, die härter ist als das Material 30, um der Luftführung 20 eine gewünschte aerodynamische Form zum Formen der Luft, zu verleihen. Die Verstärkungsstruktur 23 ist in den Ausführungsbeispielen der Figuren 2a bis 6b dargestellt. Sie kann aus Hartplastik, Leichtmetall, Glasfasern oder dergleichen ausgebildet sein. Die Verstärkungsstruktur 23 hilft im Montagezustand I, das Material 30 aufzuspannen, um eine optimale geometrische Form der Luftführung 20 zu erhalten. Außerdem dient die Verstärkungsstruktur 23 zum Stabilisieren der Mantelfläche des Luftführungskörpers 20. Durch das flexible Material und die geeignete Verstärkungsstruktur 23 kann die Luftführung 10 unterschiedlicher Geometrien, wie gezeigt in Figuren 3a, 5a und 6b, ausgeformt werden. Des Weiteren bildet die Verstärkungsstruktur 23 ein Skelett der Luftführung 10, sodass die Luftführung 10 nach einem Teleskopprinzip zusammengefaltet und aufgebaut werden kann, wie gezeigt in den Figuren 2b, 4a und 4b. Der Aufbau und die Montage der erfindungsgemäßen Luftführung 10 werden somit erheblich vereinfacht. Die Verstärkungsstruktur 23 kann entweder im Material 30 integriert, beispielsweise eingewebt, direkt am Material 30 aufgeklebt, oder zumindest zum Teil durch das Material 30 selbst gebildet sein.

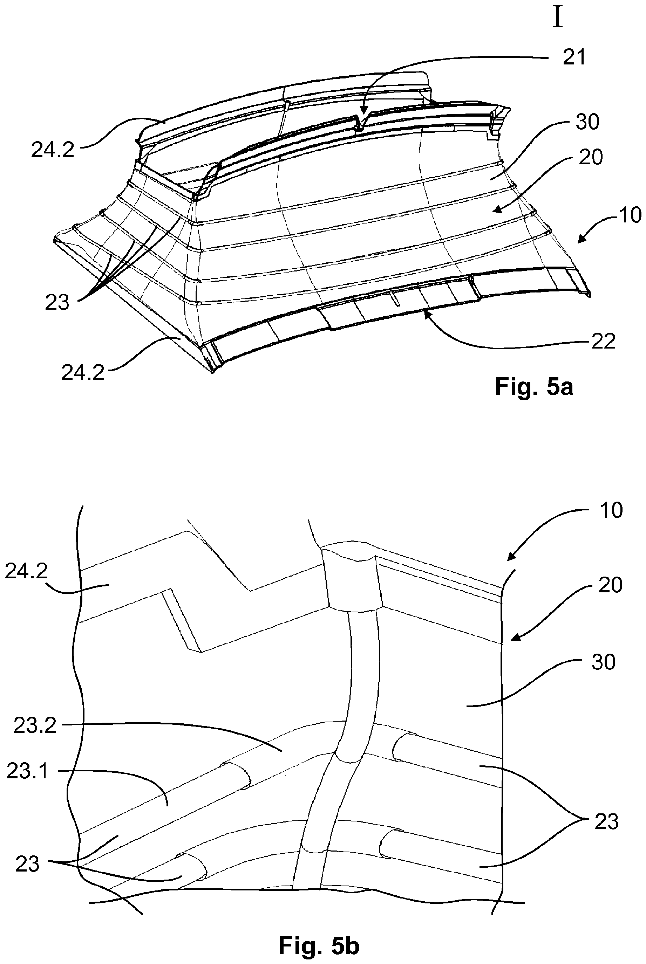

Die Verstärkungsstruktur 23 kann Verstärkungselemente 23.1 und 23.2 in oder am Luftführungskörper 20 aufweisen. Die Verstärkungselemente 23.1 und 23.2 können dabei, wie gezeigt in den Figuren 2a bis 4b, die Lufteintrittsöffnung 21 und die Luftaustrittsöffnung 22 bestimmen. Gemäß weiteren möglichen, nicht erfindungsgemäßen, Ausgestaltungen der Luftführung 10 können die Verstärkungselemente 23 Eckelemente 23.2 und Stäbe 23.1 gemäß der Figuren 5a und 5b aufweisen. Die Eckelemente 23.2 können beispielsweise aus hartem Kunststoff ausgebildet sein und Öffnungen zum Aufnehmen von Stäben 23.1 aufweisen, die beispielsweise aus Glasfaser oder aus Leichtmetall ausgebildet sein können. Die Eckelemente 23.2 dienen gemäß Figuren 4a und 4b zum Halten der Form der Luftführung 10 und die Stäbe 21.1 zum Aufspannen des Materials 30. Zusammen können die Verstärkungselemente 23 ein Skelett bzw. ein Gestell der Luftführung 10 einer bestimmten Form bilden, über welche das Material 30 aufgespannt wird. Die erfindungsgemäßen Verstärkungselemente 23 bilden dabei ringförmige Elemente, die sich senkrecht zur Richtung von der Luftaustrittsöffnung 22 zu der Lufteintrittsöffnung 21 mit kleiner werdenden Umfängen erstrecken. Die Verstärkungselemente 23 können deswegen dazu beitragen, das Teleskopprinzip beim Zusammenfalten der Luftführung 10 zu schaffen. Alternativ ist es denkbar, dass die Verstärkungselemente 23 sich in Richtung von der Luftaustrittsöffnung 22 zu der Lufteintrittsöffnung 11 erstrecken. Dann könnten die Verstärkungselemente 23 mit Gelenken versehen werden, um die Luftführung 10 in den Transportzustand II zusammenfalten zu können.

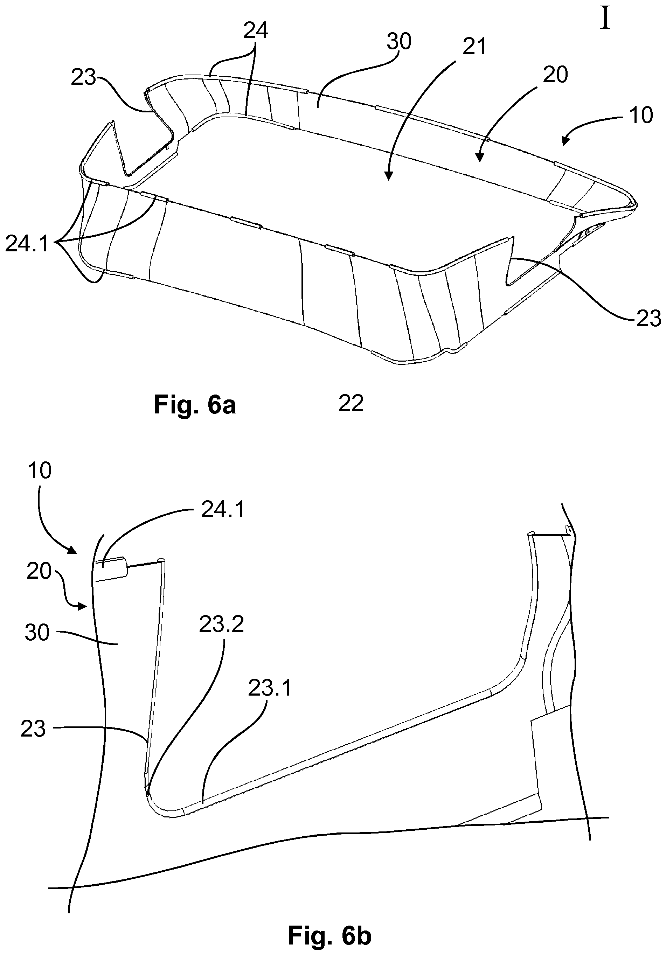

Gemäß der Figuren 2a und 2b können die Verstärkungselemente 23 außerdem zum Befestigen der Luftführung 10 am Fahrzeug dienen. Gemäß der Figuren 6a und 6b können die Verstärkungselemente 23 Öffnungen zum Durchführen einer Stoßstange bilden. Zudem können die Verstärkungselemente 23 austauschbar am Material integriert sein. Dabei können die Verstärkungselemente 23 beispielsweise in die eingewebten Öffnungen im Material 30 eingeführt werden. Alternativ können die Verstärkungselemente 23 direkt am Material 30 eingeklebt oder eingeschweißt sein. Austauschbare Verstärkungselemente 23 können vorteilhafterweise dazu dienen, die Luftführung 10 in Form eines Baukastensystems bereitzustellen, um Luftführungen 10 für verschiedene Fahrzeuge flexibel zusammenzubauen.

Der Luftführungskörper 20 gemäß den Figuren 3a, 3b, 5a bis 6b weist außerdem Befestigungselemente 24 auf, um die Luftführung 10 mit der Lufteintrittsöffnung 21 an einer Öffnung im Karosserieaußenteil bzw. am Frontendmodul 11 und mit der Luftaustrittsöffnung 22 am Kühlmodul 12 zu befestigen. Die Befestigungselemente 24 können außerdem abdichtend wirken, um zu vermeiden, dass Schmutz in den Motorinnerraum gerät. Die Befestigungselemente 24 gemäß Figur 3b können direkt am Material 30 eingeklebt oder eingeschweißt werden. Die Befestigungselemente 24 gemäß den Figuren 5a und 5b können am Material 30 eingeclipst bzw. eingeklemmt werden oder sogar im Material 30 eingewebt sein. Die Befestigungselemente 24 können ebenfalls dazu beitragen, eine stabile Form der Luftführung 10 im Montagezustand I zu halten. Zudem können die Befestigungselemente 24 zum Greifen beim Aufspannen des Materials 30 helfen, um die Montage der Luftführung 10 zu erleichtern. Gemäß der Figur 5a können die Befestigungselemente 24 in Form von Kunststoffrahmen 24.2 dazu dienen, die Lufteintrittsöffnung 21 und die Luftaustrittsöffnung 22 zumindest zum Teil zu definieren. Die Befestigungselemente 24 gemäß der Figur 3b sind in Form von Klemmelementen bzw. Haken ausgebildet, um die Luftführung 10 am Frontendmodul 11 und am Kühlmodul 12 stoff- und/oder kraftschlüssig zu befestigen. Die Montage der Luftführung 10 am Fahrzeug kann daher leicht und bequem ausgeführt werden.

Die erfindungsgemäße Luftführung 10 kann, wie gezeigt in Figur 2b, im Transportzustand II zunächst am Kühlmodul 12 befestigt werden und erst dann, wie gezeigt in Figur 2a in den Montagezustand I aufgespannt werden. Alternativ kann die Luftführung 10 im Transportzustand II zunächst am Frontendmodul 11 befestigt werden und dann in den Montagezustand I aufgespannt werden. Weiterhin ist es denkbar, dass die Luftführung 10 zuerst in den Montagezustand I überführt werden kann und dann am Fahrzeug befestigt werden kann.

Die erfindungsgemäße Luftführung 10 kann vorteilhafterweise einfach und schnell aufgebaut werden und für verschiedene Fahrzeugmodelle geeignet sein. Die Befestigungselemente 24 aus den Figuren 3a, 3b und 5a bis 6b sowie die Verstärkungselemente 23 aus den Figuren 2a bis 6b können beliebig kombiniert werden, um die Luftführung 10 in Form eines Baukastensystems für verschiedene Fahrzeuge bereitzustellen.

### Bezugszeichenliste

- 10: Luftführung
- 11: Frontendmodul
- 12: Kühlmodul

- 20: Luftführungskörper
- 21: Lufteintrittsöffnung
- 22: Luftaustrittsöffnung
- 23: Verstärkungsstruktur, Verstärkungselemente
- 23.1: Stäbe
- 23.2: Eckelemente
- 24: Befestigungselemente,
- 24.1: Rast-, Clipselemente, Haken
- 24.2: Kunststoffrahmen

- 30: Material

- I: Montagezustand
- II: Transportzustand

## Patentansprüche

1. Luftführung (10), insbesondere für ein Kühlmodul (12) eines Frontendmoduls (11) eines Kraftfahrzeuges, mit einem Luftführungskörper (20), der eine Lufteintrittsöffnung (21) und eine Luftaustrittsöffnung (22) aufweist, um Luft von außen nach innen bzgl. des Kraftfahrzeuges zu führen, wobei der Luftführungskörper (20) aus einem derartigen Material (30) ausgebildet ist, dass der Luftführungskörper (20) in einen Montagezustand (I) und in einen Transportzustand (II) bringbar ist, wobei der Luftführungskörper (20) im Montagezustand (I) ein wesentlich größeres Volumen einnimmt als im Transportzustand (II), wobei
der Luftführungskörper (20) eine Verstärkungsstruktur (23) aufweist, die stabiler ist als das Material (30), wobei
die Verstärkungsstruktur (23) im Material (30) integriert ist und/oder durch das Material (30) gebildet ist, wobei
die Verstärkungsstruktur (23) Verstärkungselemente (23) in oder am Luftführungskörper (20) aufweist, **dadurch gekennzeichnet, dass** die Verstärkungselemente (23) Stäbe (23.1) aufweisen.

2. Luftführung (10) nach Anspruch 1,
**dadurch gekennzeichnet,**
**dass** das Material (30) ein Textil ist.

3. Luftführung (10) nach Anspruch 1 oder 2,
**dadurch gekennzeichnet,**
**dass** das Material (30) aus synthetischen Polymeren ausgebildet ist, insbesondere aus Polyester, Polyamid, Polyimid, Polyethylen, Polypropylen, Elastan, Nylon oder dergleichen.

4. Luftführung (10) nach Anspruch 1 oder 2,
**dadurch gekennzeichnet,**
**dass** das Material (30) aus natürlichen Fasern oder Polymeren ausgebildet ist, insbesondere aus Baumwolle, Leinen, Viskose, Modal, Gummi oder dergleichen.

5. Luftführung (10) nach einem der vorhergehenden Ansprüche,
**dadurch gekennzeichnet,**
**dass** das Material (30) luftundurchlässig und/oder wasserabweisend und/oder faltbar ist.

6. Luftführung (10) nach einem der vorhergehenden Ansprüche,
**dadurch gekennzeichnet,**
**dass** die Verstärkungsstruktur (23) Verstärkungselemente (23) an der Lufteintrittsöffnung (21) oder an der Luftaustrittsöffnung (22) aufweist, insbesondere dass die Stäbe (23.1) aus Glasfaser und/oder Leichtmetall ausgebildet sind.

7. Luftführung (10) nach Anspruch 6,
**dadurch gekennzeichnet,**
**dass** die Verstärkungselemente (23.1) im Wesentlichen in Richtung von der Luftaustrittsöffnung (22) zu der Lufteintrittsöffnung (21) und/oder quer dazu ausgerichtet sind.

8. Luftführung (10) nach einem der Ansprüche 6 bis 7,
**dadurch gekennzeichnet,**
**dass** die Verstärkungselemente (23.1) austauschbar und/oder fest im Material (30) integriert sind.

9. Luftführung (10) nach einem der vorhergehenden Ansprüche,
**dadurch gekennzeichnet,**
**dass** der Luftführungskörper (20) Befestigungselemente (24) aufweist, um die Luftführung (10) am Kraftfahrzeug form- und/oder kraftschlüssig zu befestigen.

10. Luftführung (10) nach Anspruch 9,
**dadurch gekennzeichnet,**
**dass** die Befestigungselemente (24) mit dem Material (30) form- und/oder kraft- und/oder stoffschlüssig verbunden sind oder im Material (30) integriert sind.

11. Luftführung (10) nach Anspruch 9 oder 10,
**dadurch gekennzeichnet,**
**dass** die Befestigungselemente (24) in Form von Kunststoffrahmen (24.2) ausgebildet sind, die die Lufteintrittsöffnung (21) und die Luftaustrittsöffnung (22) zumindest zum Teil definieren.

12. Luftführung (10) nach Anspruch 9 oder 10,
**dadurch gekennzeichnet,**
**dass** die Befestigungselemente (24) in Form von Rast- und/oder Clipselementen (24.1) oder in Form von Haken (24.1) ausgebildet sind.

13. Verfahren zur Montage einer Luftführung (10), nach einem der vorhergehenden Ansprüche, an einem Kühlmodul (12) eines Frontendmoduls (11) eines Kraftfahrzeuges, umfassend folgende Schritte:
a. Überführen der Luftführung (10) von einem Transportzustand (II) in einen Montagezustand (I), wobei die Luftführung (10) im Montagezustand (I) ein wesentlich größeres Volumen einnimmt als im Transportzustand (II),
b. Montieren der Luftführung (10) am Frontendmodul (11) und/oder am Kühlmodul (12),
wobei die Schritte in beliebiger Reihenfolge ausgeführt werden können.

14. Frontendmodul (11) eines Kraftfahrzeuges mit einer Luftführung (10) nach einem der Ansprüche 1 bis 12, die nach einem Verfahren gemäß Anspruch 13 an einem Frontendmodul (11) eines Kraftfahrzeuges montierbar ist.

## Claims

1. Air guide (10), particularly for a cooling module (12) of a front-end module (11) of a motor vehicle with an air guide body (20) which comprises an air inlet opening (21) and an air outlet opening (22) in order to guide air from the outside to the inside with regard to the motor vehicle,
wherein
the air guide body (20) is made of a material (30) so that the air guide body (20) can be transferred in a mounting state (I) and a transport state (II) wherein the air guide body (20) takes up a significantly larger volume in the mounting state (I) than in the transport state (II)
wherein the air guide body (20) has a reinforcement structure (23) that is more stable than the material (30),
wherein the reinforcement structure (23) is integrated into the material (30) and/or formed by the material (30),
wherein the reinforcement structure (23) has reinforcement elements (23) on or in the air guide body (20), **characterized in that** the reinforcement elements (23) comprise rods (23.1).

2. Air guide (10) according to claim 1,
**characterized in that**
the material (30) is a textile.

3. Air guide (10) according to claim 1 or 2
**characterized in that**
the material (30) is formed from synthetic polymers, in particular from polyester, polyamide, polyimide, polyethylene, polypropylene, elastane, nylon or the like.

4. Air guide (10) according to claim 1 or 2,
**characterized in that**
the material (30) is formed from natural fibres or polymers, in particular from cotton, linen, viscose, modal, rubber or the like.

5. Air guide (10) according to one of the preceding claims,
**characterized in that**
the material (30) is airtight and/or water repellent and/or foldable.

6. Air guide (10) according to one of the preceding claims,
**characterized in that**
the reinforcing structure (23) has reinforcing elements (23) at the air inlet opening (21) or at the air outlet opening (22), in particular **in that** the rods (23.1) are made of glass fiber and/or a light metal.

7. Air guide (10) according to claim 6,
**characterized in that**
the reinforcing elements (23.1) are aligned substantially in the direction of and or transversely to the air inlet opening (21) from the air outlet opening (22).

8. Air guide (10) according to claim 6 or 7,
**characterized in that**
the reinforcing elements (23.1) are interchangeable and/or firmly integrated in the material (30).

9. Air guide (10) according to one of the preceding claims,
**characterized in that**
the air guide body (20) has attachment elements (24) for securing the air guide (10) to the motor vehicle in a positive- and/or force-locking manner.

10. Air guide (10) according to claim 9,
**characterized in that**
the attachment elements (24) are connected to the material (30) in a positive- and/or force- and/or substance-locking manner or are integrated in the material (30).

11. Air guide (10) according to claim 9 or 10,
**characterized in that**
the attachment elements (24) are formed in the form of plastic frames (24.2) which define the air inlet opening (21) and the air outlet opening (22) at least partially.

12. Air guide (10) according to claim 9 or 10,
**characterized in that**
the attachment elements (24) are in the form of snap-in and/or clip-on elements (24.1) or in the form of hooks (24.1).

13. A method for assembling an air guide (10), according to one of the preceding claims, on a cooling module (12) of a front-end module (11) of a motor vehicle, comprising the following steps:
a) transferring the air guide (10) from a transport state (II) to a mounting state (I), wherein the air guide (10) occupies the substantially larger volume in the mounting state (I) than in the transport state (II),
b) mounting the air guide (10) on the front-end module (11) and/or on the cooling module (12),
where the steps can be executed in any order.

14. Front-end module (11) of a motor vehicle having an air guide (10) according to one of the claims 1 to 12, which can be mounted on a front-end module (11) of a motor vehicle by a method according to claim 13.

## Revendications

1. Dispositif (10) de guidage d'air notamment destiné à un module de refroidissement (12) d'un module avant (11) d'un véhicule automobile, muni d'un corps (20) de guidage d'air qui comporte un orifice (21) d'entrée d'air et un orifice (22) de sortie d'air, en vue de canaliser de l'air de l'extérieur vers l'intérieur par rapport audit véhicule automobile,
le corps (20) de guidage d'air étant réalisé en un matériau (30) tel que ledit corps (20) de guidage d'air puisse être amené à un état de montage (I) et à un état de transport (II), sachant que ledit corps (20) de guidage d'air occupe, à l'état de montage (I), un volume notablement plus grand qu'à l'état de transport (II),
ledit corps (20) de guidage d'air étant pourvu d'une structure de renfort (23) plus stable que le matériau (30),
ladite structure de renfort (23) étant intégrée dans ledit matériau (30), et/ou constituée dudit matériau (30),
ladite structure de renfort (23) présentant des éléments de renfort (23), dans ou sur ledit corps (20) de guidage d'air, **caractérisé par le fait que**
les éléments de renfort (23) comportent des barreaux (23.1).

2. Dispositif (10) de guidage d'air selon la revendication 1,
**caractérisé par le fait**
**que** le matériau (30) est un textile.

3. Dispositif (10) de guidage d'air selon la revendication 1 ou 2,
**caractérisé par le fait**
**que** le matériau (30) consiste en des polymères synthétiques, notamment en du polyester, en un polyamide, en un polyimide, en du polyéthylène, en du polypropylène, en un élasthanne, en du Nylon ou en des substances similaires.

4. Dispositif (10) de guidage d'air selon la revendication 1 ou 2,
**caractérisé par le fait**
**que** le matériau (30) consiste en des fibres ou des polymères naturel(le)s, notamment en du coton, en du lin, en de la viscose, en du Modale, en du caoutchouc ou en des substances similaires.

5. Dispositif (10) de guidage d'air selon l'une des revendications précédentes,
**caractérisé par le fait**
**que** le matériau (30) est imperméable à l'air et/ou hydrophobe et/ou apte au pliage.

6. Dispositif (10) de guidage d'air selon l'une des revendications précédentes,
**caractérisé par le fait**
**que** la structure de renfort (23) présente des éléments de renfort (23) au niveau de l'orifice (21) d'entrée d'air ou au niveau de l'orifice (22) de sortie d'air ; notamment par le fait que les barreaux (23.1) sont réalisés en fibre de verre et/ou en métal léger.

7. Dispositif (10) de guidage d'air selon la revendication 6,
**caractérisé par le fait**
**que** les éléments de renfort (23.1) sont orientés, pour l'essentiel, dans la direction partant de l'orifice (22) de sortie d'air et gagnant l'orifice (21) d'entrée d'air, et/ou transversalement par rapport à ladite direction.

8. Dispositif (10) de guidage d'air selon l'une des revendications 6 à 7,
**caractérisé par le fait**
**que** les éléments de renfort (23.1) sont intégrés dans le matériau (30) avec faculté de remplacement, et/ou de manière fixe.

9. Dispositif (10) de guidage d'air selon l'une des revendications précédentes,
**caractérisé par le fait**
**que** le corps (20) de guidage d'air est doté d'éléments de fixation (24), en vue de fixer ledit dispositif (10) de guidage d'air au véhicule automobile par complémentarité de formes et/ou par engagement positif.

10. Dispositif (10) de guidage d'air selon la revendication 9,
**caractérisé par le fait**
**que** les éléments de fixation (24) sont reliés au matériau (30) par complémentarité de formes et/ou par engagement positif et/ou par solidarisation matérielle, ou bien sont intégrés dans ledit matériau (30).

11. Dispositif (10) de guidage d'air selon la revendication 9 ou 10,
**caractérisé par le fait**
**que** les éléments de fixation (24) sont réalisés sous la forme de cadres (24.2) en matière plastique qui définissent, au moins en partie, l'orifice (21) d'entrée d'air et l'orifice (22) de sortie d'air.

12. Dispositif (10) de guidage d'air selon la revendication 9 ou 10, **caractérisé par le fait**
**que** les éléments de fixation (24) sont réalisés sous la forme d'éléments (24.1) encliquetables et/ou clipsables, ou sous la forme de crochets (24.1).

13. Procédé de montage d'un dispositif (10) de guidage d'air, conforme à l'une des revendications précédentes, sur un module de refroidissement (12) d'un module avant (11) d'un véhicule automobile, incluant les étapes suivantes :
a. mutation du dispositif (10) de guidage d'air d'un état de transport (II) à un état de montage (I), sachant que ledit dispositif (10) de guidage d'air occupe, à l'état de montage (I), un volume notablement plus grand qu'à l'état de transport (II),
b. montage dudit dispositif (10) de guidage d'air sur le module avant (11) et/ou sur le module de refroidissement (12),
lesdites étapes pouvant être exécutées suivant n'importe quel ordre séquentiel.

14. Module avant (11) d'un véhicule automobile, équipé d'un dispositif (10) de guidage d'air qui est conforme à l'une des revendications 1 à 12 et peut être monté, suivant un procédé conforme à la revendication 13, sur un module avant (11) d'un véhicule automobile.
